# EUROPÄISCHE PATENTANMELDUNG

(11) **EP 0 816 264 A1**
(43) Veröffentlichungstag der Anmeldung: **07.01.1998**
(21) Anmeldenummer: 97109892.6
(22) Anmeldetag: 18.06.1997
(51) Int. Cl.: B65G 47/84, B65B 35/26

(54) **Verfahren und Vorrichtung zum Ausrichten von Packstücken aus ihrer Längslage in ihre Querlage**

(30) Priorität: 03.07.1996 DE 19626713
(71) Anmelder: ROSE VERPACKUNGSMASCHINEN-FABRIK THEEGARTEN GmbH & Co. KG, D-50825 Köln (DE)
(72) Erfinder: Schönenberg, Kurt, 50321 Brühl (DE); Rütter, Karl-Josef, 50259 Pulheim (DE)
(74) Vertreter: Hennicke, Ernst Rüdiger

(57) **Zusammenfassung**

Verfahren und Vorrichtung zum Ausrichten von einer Verpackungsmaschine aufeinanderfolgend zugeführten Packstücken (11) aus ihrer Längs- in ihre Querlage, wobei die Packstücke mittels einer Zufuhreinrichtung (18) vereinzelt und in Längslage einer Übergabeeinrichtung (19) zugeführt werden, die die Packstücke in der Reihenfolge ihrer Zufuhr übernimmt und unter Beibehaltung von deren Lageausrichtung relativ zur Zuvorrichtung an eine Abtransporteinrichtung (20) übergibt, deren Transportrichtung rechtwinklig zur Zufuhrrichtung ist. In bevorzugter Ausgestaltung der Erfindung ist die Übergabeeinrichtung im wesentlichen als eine Drehscheibe (31) ausgebildet, zu der die Zufuhreinrichtung und die Abtransporteinrichtung etwa tangential ausgerichtet sind und wobei die Drehscheibe mindestens einen gegenüber dieser verdrehbaren Drehstempel (34) aufweist, mit dessen Hilfe das Packstück zwischen dessen Übernahme von der Zufuhreinrichtung und dessen Übergabe an die Abtransporteinrichtung gegenüber der Drehscheibe um 90° verdreht wird. Dabei werden die Packstücke zweckmäßig mittels einer Unterdruckeinrichtung an die Drehstempel angesaugt, wodurch sie besonders schonend behandelt werden und auch empfindliche Produkte beim Umsetzen aus der Längslage in die Querlage nicht beschädigt werden.

## Beschreibung

Die Erfindung betrifft ein Verfahren zum Ausrichten von einer Verpackungsmaschine aufeinanderfolgend zugeführten Packstücken aus ihrer Längslage in ihre Querlage. Die Erfindung ist weiter auf eine Vorrichtung zum Ausrichten von Packstücken aus ihrer Längslage in ihre Querlage gerichtet, in der sie nacheinander einer Verpackungsmaschine zugeführt werden, mit einer Zufuhreinrichtung und einer Abtransporteinrichtung und mit einer Übergabeeinrichtung, mit deren Hilfe die Packstücke in ihrer Längslage nacheinander von der Zufuhreinichtung übernommen und in ihrer Querlage der Abtransporteinrichtung übergeben werden.

Packstücke wie z.B. Bonbons, Schokoladeriegel, Zuckerstücke, Komprimate und ähnliche Artikel werden einer Verpackungsmaschine in geordneten Reihen nacheinander zugeführt und hierzu von an sich bekannten Maschinen wie beispielsweise Schwingförderern, Rotationsscheiben, Zick-Zack-Bändern od.dgl. alle in dieselbe Lage ausgerichtet.

Packstücke, die eine größere Länge als Breite haben, die also keine quadratische Grundform aufweisen, können wegen ihres in Breite und Länge unterschiedlichen Masseträgheitsmoments nur in Längsrichtung ausgerichtet werden, d.h. in einer Richtung, in der die schmalen Stirnseiten des Artikels in Förderrichtung vorn bzw. hinten liegen, während die längeren Längsseiten parallel zur Förderrichtung verlaufen. Aufgrund der Verpackungsart müssen derartige langformatige Packstücke der nachfolgenden Verpackungsmaschine vielfach in Querlage zugeführt werden, also in einer Lage, in der die längeren Längsseiten rechtwinklig zur Förderrichtung und die schmalen Stirnseiten parallel zu dieser verlaufen.

Um die in Längslage ausgerichteten Artikel in ihre rechtwinklig dazu verlaufende Querlage umzusetzen, sind mechanische Greifereinrichtungen vorgeschlagen worden, die die Packstücke, die von einer Zufuhreinrichtung in ihrer Längslage nacheinander zugeführt werden, einzeln greifen und in ihre Querlage verschwenken, in der sie an eine Abtransporteinrichtung abgegeben werden, die die Artikel dann der Verpackungsmaschine zuleitet. Derartige mechanische Einrichtungen zum Umsetzen der Packstücke haben den Nachteil, daß insbesondere empfindliche Produkte wie z.B. weichelastische Bonbons, Schokoladeriegel od. dgl. infolge der Greifkräfte, insbesondere aber wegen der hohen Beschleunigungskräfte beim Umsetzen um 90° in der Greifereinrichtung stark beansprucht und daher bei ihrem Verschwenken leicht beschädigt werden können, was den Ausschuß der Verpackungsmaschinenanlage erhöht und zu häufigen Störungen im Betrieb führt.

Aufgabe der Erfindung ist es, ein Verfahren und eine Vorrichtung der eingangs genannten Art zu schaffen, womit diese Nachteile vermieden werden und eine besonders produktschonende und zuverlässige Ausrichtung der Packstücke möglich ist.

Diese Aufgabe wird verfahrensgemäß dadurch gelöst, daß die Packstücke mittels einer Zufuhreinrichtung vereinzelt und in Längslage einer Übergabeeinrichtung zugeführt werden, die die Packstücke in der Reihenfolge ihrer Zufuhr übernimmt und unter Beibehaltung von deren Lageausrichtung relativ zur Zufuhrrichtung an eine Abtransporteinrichtung übergibt, deren Transportrichtung rechtwinklig zur Zufuhrrichtung ist. Nach dem erfindungsgemäßen Verfahren werden die Packstücke also selbst gar nicht verschwenkt, sondern behalten ihre relative Ausrichtung gegenüber einem feststehenden Beobachtungspunkt bei. Lediglich ihre Transportrichtung erfährt einen Wechsel um 90° infolge der rechtwinklig zueinander angeordneten Zufuhr- und Abtransporteinrichtungen, so daß die ursprünglich in Längsrichtung transportierten Gegenstände nach ihrer Übergabe an die Abtransporteinrichtung von dieser in Querlage der Verpackungsmaschine zugeführt werden. Nach der Erfindung treten also die bei den bekannten Maschinen infolge des Verdrehens auftretenden, großen Beschleunigungskräfte auf die einzelnen Packstücke nicht mehr auf, so daß daraus resultierende Beschädigungen von empfindlichen Artikeln wie z.B. weichen Bonbons oder Schokoladeriegeln vermieden werden.

In besonders vorteilhafter Ausgestaltung des erfindungsgemäßen Verfahrens werden die Packstücke bei ihrer Übergabe von der Zufuhreinrichtung zur Abtransporteinrichtung mittels Unterdruck in ihrer Lage in der Übergabeeinrichtung gehalten. Auf diese Art und Weise kann auf mechanische Greifer verzichtet werden, was die Gefahr von Beschädigungen der Packstücke während des Übergabevorgangs weiter verringert. Die Packstücke werden bei ihrer Zufuhr und/oder ihrem Abtransport zweckmäßig von mindestens einer seitlichen Führungsleiste geführt, die etwa bis zu dem Übernahmepunkt zwischen der Zufuhreinrichtung und der Übergabeeinrichtung bzw. dem Übergabepunkt zwischen der Übergabeeinrichtung und der Abtransporteinrichtung reicht. Derartige Führungsleisten geben dem Packstück beim Transport eine seitliche Führung und stellen so sicher, daß dieses immer genau im rechten Winkel zur Transportrichtung ausgerichtet ist.

Die Transportgeschwindigkeiten der Zufuhreinrichtung und der Abtransporteinrichtung sind vorzugsweise gleich groß. Eine besonders vorteilhafte Ausgestaltung des erfindungsgemäßen Verfahrens ergibt sich dann, wenn die Übergabeeinrichtung im Übernahmepunkt eine erste Geschwindigkeitskomponente in Zufuhrrichtung der Packstücke hat, die deren Zufuhrgeschwindigkeit entspricht und wenn diese erste Geschwindigkeitskomponente während des Übergabevorgangs zur Abtransporteinrichtung auf Null verzögert wird, während gleichzeitig die normal (senkrecht) zur ersten Geschwindigkeitskomponente verlaufende zweite Geschwindigkeitskomponente von Null im Übernahmepunkt auf die Abtransportgeschwindigkeit im Übergabepunkt beschleunigt wird. Ein derartiges Verfahren läßt sich besonders einfach realisieren, wenn die Übergabeeinrichtung im wesentlichen als rotierende Scheibe mit darin gegenläufig rotierenden Haltemitteln für die Packstücke ausgebildet ist, wobei dann zweckmäßig die einzelnen Packstücke den Haltemitteln im Übernahmepunkt tangential zur Drehrichtung der Scheibe zugeführt und nach einer Drehung der Scheibe um 90° im Übergabepunkt tangential zur Scheibendrehrichtung von den Haltemitteln der Abtransporteinrichtung übergeben werden.

Die insbesondere zur Durchführung des oben beschriebenen Verfahrens geeignete Vorrichtung nach der Erfindung ist dadurch gekennzeichnet, daß die Übergabeeinrichtung im wesentlichen aus einer Drehscheibe besteht, zu der die Zufuhreinrichtung und die Abtransporteinrichtung tangential ausgerichtet sind, wobei die Drehscheibe mindestens ein gegenüber dieser verdrehbares Haltemittel aufweist, mit dessen Hilfe ein Packstück zwischen dessen Übernahme von der Zufuhreinrichtung und dessen Übergabe an die Abtransporteinrichtung gegenüber der Drehscheibe um 90° verdreht wird. In besonders vorteilhafter Ausgestaltung der Erfindung sind dabei die Zufuhreinrichtung und die Abtransporteinrichtung ebenfalls in einem Winkel von 90° zueinander angeordnet, so daß das Packstück während seines Weges vom Übernahmepunkt zum Übergabepunkt relativ zu einem feststehenden Beobachter nicht seine Ausrichtung, sondern lediglich seine Transportrichtung verändert.

Die Drehscheibe ist vorzugsweise mit mehreren, auf ihrem Umfang verteilten Halteeinrichtungen versehen, so daß auch eine große Anzahl von Packstücken innerhalb kurzer Zeit aus ihrer Längslage in ihre Querlage umgesetzt werden können. Dabei sind die Halteeinrichtungen vorzugsweise im wesentlichen als in der Ebene der Drehscheibe angeordnete Drehteller mit Ansaugöffnungen ausgebildet, die mit einer Unterdruckeinrichtung verbindbar sind. Die Packstücke können dann von der Zufuhreinrichtung auf die ebene Drehscheibe bzw. die darin angeordneten Drehteller geschoben werden und werden während ihres Transportes auf diesen durch Unterdruck gehalten, so daß sie nicht durch Fliehkräfte vom Drehteller geschleudert werden können. Vorzugsweise sind die Ansaugöffnungen im Drehbereich des Drehtellers zwischen dem Übernahmepunkt von der Zufuhreinrichtung und dem Übergabepunkt an die Abtransporteinrichtung mit der Unterdruckeinrichtung verbunden, d.h. in dem Bereich, in dem tatsächlich Packstücke die Ansaugöffnungen abdecken, so daß in dem übrigen Bereich, in dem die Drehteller leer vom Übergabepunkt zurück zum Übernahmepunkt laufen, keine Falschluft durch die Ansaugöffnungen gezogen wird, so daß die den Unterdruck erzeugende Unterdruckpumpe vergleichsweise klein dimensioniert werden kann.

Die Halteeinrichtungen sind zweckmäßig über ein Getriebe, vorzugsweise ein Parallelkurbelgetriebe mit der Drehscheibe bzw. mit deren Drehantrieb gekoppelt. Dadurch wird sichergestellt, daß das Drehzahlverhältnis von den Halteeinrichtungen zur Drehscheibe immer konstant ist und es kann auf einen separaten Antrieb für die Halteeinrichtungen und eine aufwendige Synchronsteuerung von diesen und der Drehscheibe verzichtet werden. Die Drehscheibe und die Drehteller der Halteeinrichtungen sind vorzugsweise in einer Ebene mit einer die Scheibe umgebenden Tischplatte angeordnet, die zumindest einen Teil der Zufuhr- und Abtransporteinrichtung bildet. Diese Transporteinrichtungen weisen zweckmäßig je ein oberhalb der Packstücke angeordnetes, umlaufendes Transportband mit die Packstücke an ihren Querseiten bzw. Längsseiten hintergreifenden Transportnocken auf, wobei der Abstand der Transportnocken vorzugsweise dem Bogenabstand der Drehachsen der Halteeinrichtungen entspricht. Dadurch ist die Synchronisation von Zufuhr- bzw. Abtransportgeschwindigkeit und Drehgeschwindigkeit der Drehscheibe besonders einfach und eine sichere Übergabe der Packstücke an die Drehteller bzw. von diesen an die Abtransporteinrichtung leicht realisierbar.

Um eine genau rechtwinklige Ausrichtung der Packstücke zur Transportrichtung sicherzustellen, ist die Zufuhreinrichtung bzw. die Abtransporteinrichtung vorzugsweise mit mindestens einer seitlichen Führungsschiene versehen. Ein besonders zuverlässiger Transport der Packstücke wird erreicht, wenn die Zufuhreinrichtung bzw. die Abtransporteinrichtung je zwei seitliche Führungsschienen aufweisen, die etwa in Tangentialrichtung über die Drehscheibe bis mindestens etwa zu dem Übernahmepunkt bzw. Übergabepunkt reichen, denn dann sind die Artikel lediglich auf dem kurzen Weg zwischen Übernahmepunkt und Übergabepunkt ohne formschlüssige Führung, in welchem Zeitraum sie jedoch durch das Vakuum sicher in ihrer Lage gehalten werden. Eine besonders zweckmäßige Ausgestaltung ergibt sich, wenn die radial weiter außen liegenden Führungsschienen bis über den Übernahmepunkt bzw. den Übergabepunkt hinausgehen. Die in der Tischplatte rotierende Drehscheibe schiebt dann die einzelnen Packstücke gegen die äußeren Führungsschienen, während sie gleichzeitig von den Transportnocken der Transportbänder zum Übernahmepunkt vorgeschoben bzw. am Übergabepunkt ergriffen werden. Dadurch wird gewährleistet, daß die Packstücke zumindest eine kurze Zeit gleichzeitig sowohl an den Transportnocken als auch an der Führungsleiste anliegen und somit in jedem Fall in ihrer gewünschten Lage ausgerichtet werden.

Die Zufuhreinrichtung kann auch ein umlaufendes Förderband für die Packstücke aufweisen, dessen Lasttrum in derselben Ebene wie die Drehscheibe angeordnet ist. Die Packstücke werden dann von dem Förderband zur Tischplatte vorgeschoben und im letzten Stück ihres Transportes von den oben angreifenden Transportnocken auf die Drehscheibe den Drehtellern übergeben.

Eine besonders einfache Ausgestaltung der erfindungsgemäßen Vorrichtung ergibt sich, wenn die Zufuhreinrichtung, die Übergabeeinrichtung und die Abtransporteinrichtung von einem gemeinsamen Antrieb angetrieben sind, zweckmäßig von der Verpackungsmaschine selbst, wodurch immer der erforderliche Synchronlauf aller Baugruppen gewährleistet ist.

Weitere Merkmale und Vorteile der Erfindung ergeben sich aus der nachfolgenden Beschreibung und den Zeichnungen, worin eine bevorzugte Ausführungsform der Erfindung an einem Beispiel näher erläutert ist. Es zeigt:
- Fig. 1: eine schematische Darstellung der erfindungsgemäßen Vorrichtung in einer Seitenansicht;

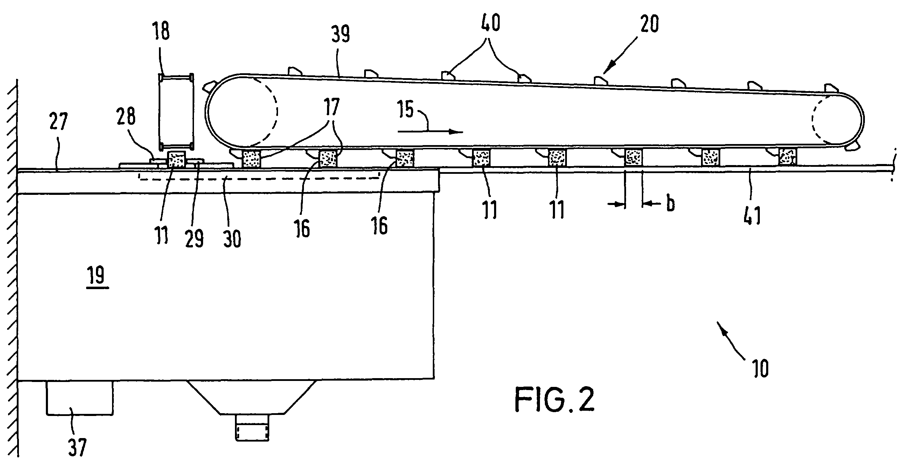

- Fig. 2: den Gegenstand der Fig. 1 in einer Ansicht längs der Richtung II nach Fig. 1 und
- Fig. 3: die Übergabeeinrichtung der erfindungsgemäßen Vorrichtung in einer Draufsicht.

In den Zeichnungen bezeichnet 10 eine Vorrichtung zum Ausrichten von Packstücken 11, beispielsweise von Bonbons oder Schokoladeriegeln, die eine größere Länge l als Breite b aufweisen und die aus ihrer Längslage in ihre Querlage umgesetzt und in dieser einer nicht dargestellten Verpackungsmaschine zugeführt werden sollen. Dabei wird unter Längslage die Lage des Packstückes verstanden, in der seine Stirnseiten 12 bzw. 13 senkrecht zur durch den Pfeil 14 angedeuteten Transportrichtung verlaufen, während seine Längsseiten 16 bzw. 17 parallel zur Transportrichtung 14 ausgerichtet sind. Als Querlage ist dementsprechend die Lage bezeichnet, in der die Längsseiten 16, 17 des Packstückes senkrecht zur Transportrichtung 15 und seine Stirnseiten 12, 13 parallel hierzu ausgerichtet sind.

Die Vorrichtung 10 besteht im wesentlichen aus einer Zufuhreinrichtung 18, einer Übergabeeinrichtung 19 und einer Abtransporteinrichtung 20, mit deren Hilfe die in ihre Querlage ausgerichteten Packstücke der nicht dargestellten Verpackungsmaschine zugeführt werden.

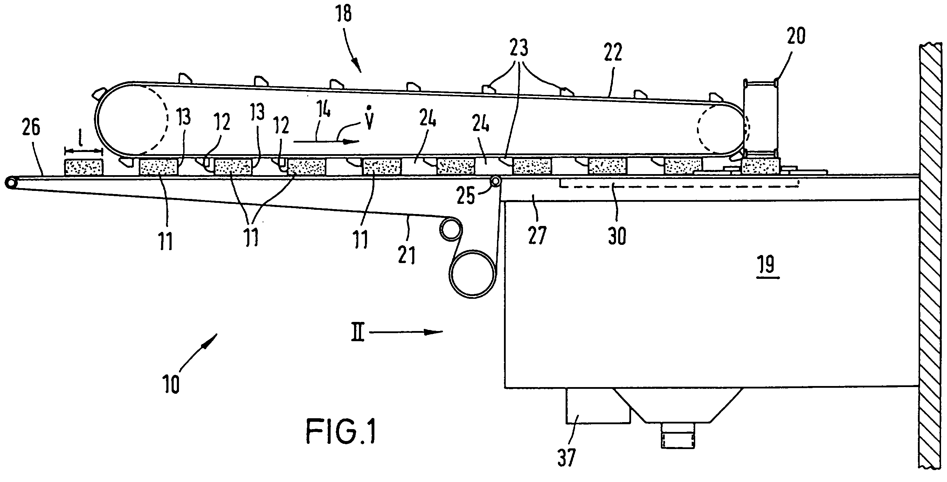

Die am besten in Fig. 1 erkennbare Zufuhreinrichtung 18 weist ein unteres, umlaufendes Förderband 21 auf, mit dessen Hilfe die in Längslage hintereinander liegenden Packstücke 11 von einer nicht näher dargestellten Vereinzelungsstation zugeführt werden. Die Zufuhreinrichtung hat weiter ein oberhalb der Packstücke angeordnetes, umlaufendes Transportband 22, das mit einer Vielzahl von in einem Abstand voneinander angeordneten Transportnocken 23 versehen ist, die von oben in die Zwischenräume 24 zwischen den Packstücken eingreifen und sich an deren hintere Stirnseiten anlegen und so den Transport der Packstücke auch über das Ende des unteren Förderbands hinaus zur Übergabeeinrichtung 19 bewirken.

Die in Längsrichtung hintereinander liegenden Packstücke 11 werden von dem oberen Transportband 22 auf eine in gleicher Höhe mit dem Lasttrum 26 des Förderbands 21 angeordnete Tischplatte 27 der Übergabeeinrichtung 19 geschoben, wobei sie entlang ihrer Längsseiten 16, 17 von Führungsschienen 28, 29 geführt werden.

Die Tischplatte 27 ist mit einer kreisförmigen Ausnehmung 30 versehen, in der eine Drehscheibe 31 drehbar angeordnet ist, deren Oberseite in einer Höhe mit der Oberseite der Tischplatte und dem Lasttrum 26 des Förderbands 21 liegt. Die Drehscheibe 31 wiederum ist auf einem Teilkreis 32 mit sechs gleichmäßig auf den Teilkreisumfang verteilten Ausnehmungen 33 versehen, in denen Drehstempel 34 a-f drehbar angeordnet sind, deren Oberseiten eine gemeinsame, ebene Fläche mit der Drehscheibe 31 und der Tischplatte 27 bilden.

Die Drehstempel 34 sind über ein nicht näher dargestelltes Parallelkurbelgetriebe mit dem (ebenfalls nicht gezeigten) Antrieb für die Drehscheibe 31 mit einem Übersetzungsfaktor von -1 gekoppelt, so daß sie sich gegenüber der Drehscheibe 31 entgegen dem Uhrzeigersinn um eine Umdrehung verdrehen, wenn die Drehscheibe um eine Umdrehung im Uhrzeigersinn verdreht wird. Dies hat zur Folge, daß die Drehstempel unabhängig von der Drehlage der Scheibe 31 gegenüber einem außerhalb der Scheibe liegenden, festen Beobachtungspunkt 35 immer dieselbe Winkelstellung beibehalten.

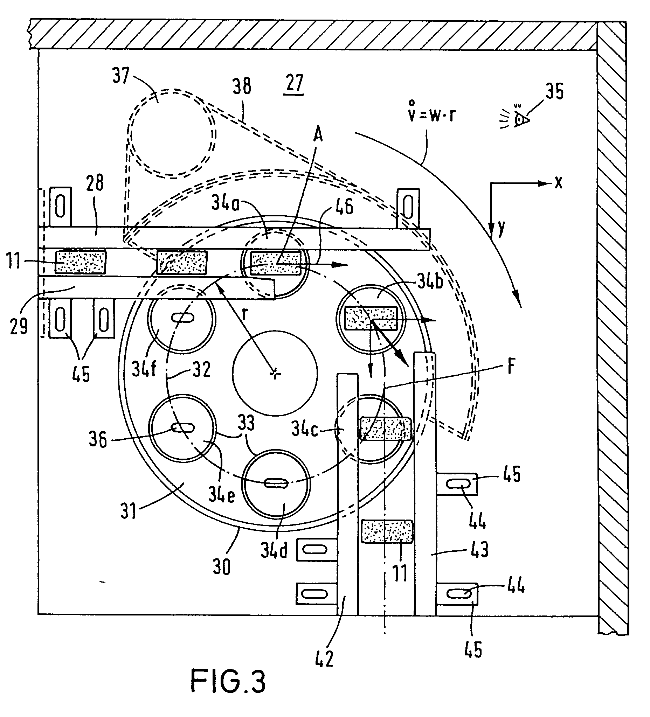

Die Drehstempel 34 sind mit in deren Drehzentrum angeordneten Unterdrucköffnungen 36 versehen, die im Drehbereich der Drehscheibe von etwa der Zufuhreinrichtung 18 bis zur Abtransporteinrichtung 20 mit einer Unterdruckeinrichtung 37, beispielsweise einer Vakuumpumpe in Verbindung stehen, wie dies durch die doppelt gestrichelten Linien 38 in Fig. 3 angedeutet ist.

Die Abtransporteinrichtung 20 ist gegenüber der Zufuhreinrichtung 18 unter einem Winkel von 90° tangential zur Drehscheibe 31 angeordnet und ist ähnlich wie die Zufuhreinrichtung mit einem oberen Transportband 39 mit einer Vielzahl von Transportnocken 40 versehen, mit deren Hilfe die nunmehr in ihrer Querlage liegenden Packstücke 11 über die Tischplatte 27 und eine daran anschließende Gleitschiene 41 der (nicht dargestellten) Verpackungsmaschine zugeführt werden. Dabei werden die Packstücke zumindest im Bereich der Tischplatte 27 von seitlichen Führungsleisten 42, 43 entlang ihrer Stirnseiten 12, 13 geführt. Dabei ist die Anordnung so getroffen, daß die innere (in Transportrichtung des Abtransportbandes rechte) Führungsleiste über die Drehscheibe bis etwa zum Übergabepunkt der Packstücke von der Drehscheibe zur Abtransporteinrichtung reicht, während die andere, äußere Führungsleiste 43 noch ein Stück weit über den Übergabepunkt hinaus über die Drehscheibe reicht.

Die Führungsleisten 42, 43 sind wie auch die Führungsschienen 28 und 29 der Zufuhreinrichtung mittels mit Langlöchern 44 versehenen Befestigungsflanschen 45 an der Tischplatte mit Hilfe von Schrauben lösbar befestigt und können so in ihrem Abstand voneinander eingestellt werden, um auch Packstücke mit anderen Längen- und Breitenabmessungen in der Maschine ausrichten zu können.

Die Ausrichtung der Packstücke in der beschriebenen Vorrichtung aus ihrer Längs- in ihre Querlage funktioniert wie folgt:

Die von einer Vereinzelungsstation kommenden, in Längslage ausgerichteten Packstücke 11 werden mit Hilfe des unteren Förderbandes 21 in Richtung auf die Übergabeeinrichtung transportiert und gelangen dabei in den Eingriffsbereich der Transportnocken 23 des oberen Transportbandes 22. Die Transportnocken 23 legen sich an die hintere Stirnseite 12 der Packstücke an und bewirken so deren Weitertransport in Zufuhrrichtung von dem unteren Förderband auf die Tischplatte 27. Im Bereich der Tischplatte werden die Packstücke dabei von den seitlichen Führungsschienen 28, 29 an ihren Längsseiten 16 und 17 geführt, wodurch sicher-gestellt ist, daß sie nicht seitlich ausbrechen können, sondern immer (recht)winklig zur Zufuhrrichtung 14 ausgerichtet sind.

Die Artikel 11 werden mit konstanter Vorschubgeschwindigkeit v bis zu einem Übernahmepunkt A an der Drehscheibe vorgeschoben. Sobald die Packstücke hierbei auf die im Uhrzeigersinn rotierende Drehscheibe gelangen, werden sie von dieser gegen die äußere Führungsschiene 28 gedrückt, womit sichergestellt ist, daß die Packstücke gleichzeitig mit ihrer hinteren Stirnseite an einem Transportnocken und mit ihrer in Transportrichtung 14 linken Längsseite an der äußeren Führungsleiste anliegen und somit auch bei ihrer Übergabe auf die Drehscheibe in Längslage ausgerichtet bleiben.

Das Transportband und die Drehscheibe sind in ihren Geschwindigkeiten derart aufeinander synchronisiert, daß immer einer der sechs Drehstempel 34 a-f mit seiner Unterdrucköffnung 36 den Übernahmepunkt A gleichzeitig mit einem Packstück 11 erreicht. Dabei ist die Umfangsgeschwindigkeit der Drehscheibe an ihrem Teilkreisradius r gleich groß oder etwas größer als die Vorschubgeschwindigkeit v des Zufuhr-Transportbandes 22 und verläuft auch in dieselbe Richtung wie diese, wie dies durch den Pfeil 46 in Fig. 3 dargestellt ist.

Das am Übernahmepunkt A von dem Drehstempel übernommene Packstück wird infolge des Unterdruckes auf dem Stempel sicher gehalten und infolge der Drehung der Drehscheibe 31 um eine Vierteldrehung zum Übergabepunkt F transportiert. Da sich die Drehstempel relativ zur Drehscheibe mit derselben Drehgeschwindigkeit, jedoch in entgegengesetzter Richtung drehen, bleibt ihre Ausrichtung und damit die der Packstücke gesehen von dem außerhalb der Drehscheibe gelegenen, festliegenden Beobachtungspunkt 35 während der Rotation immer gleich, d.h. die Längsseiten 16, 17 eines am Übergabepunkt F angelangten Packstückes verlaufen weiterhin parallel zu den Längsseiten der mittels der Zufuhreinrichtung 18 zugeführten Packstücke.

Während des Weges eines Packstückes vom Übernahmepunkt A zum Übergabepunkt F verändern sich dessen Geschwindigkeitskomponenten in einer Richtung parallel zur Zufuhrrichtung und der Richtung parallel zur Abtransportrichtung, wie dies anhand des Drehstempels 34b mit Hilfe der Geschwindigkeitspfeile angedeutet ist. Dies bedeutet, daß die Geschwindigkeitskomponente in Zufuhrrichtung im Übernahmepunkt A maximal ist und von dort bis zum Übergabepunkt F stetig auf Null abnimmt, während gleichzeitig die senkrecht hierzu gerichtete Geschwindigkeitskomponente in Richtung der Abtransporteinrichtung sich von Null im Übernahmepunkt A auf den Maximalwert der Umfangsgeschwindigkeit am Teilkreis 32 erhöht, mit der das jeweilige Packstück 11 der Abtransporteinrichtung 20 übergeben wird.

Bei dieser Übergabe an die Abtransporteinrichtung wird das Packstück nunmehr in seiner Querlage zwischen die beiden Führungsleisten 42, 43 eingeführt und dann von oben von Transportnocken 40 des oberen Abtransportbandes 39 an seiner hinteren Längsseite 16 hintergriffen und über die Tischplatte aus dem Bereich der Drehscheibe gefördert. Dabei gleitet der das Packstück zuvor transportierende Saugstempel 34 seitlich unter dem jeweiligen Packstück weg, das sich dabei an die innere Führungsleiste 42 mit seiner einen Stirnseite anlegt. Da in diesem Bereich nach dem Übergabepunkt F der Drehstempel bereits nicht mehr mit der Unterdruckeinrichtung in Verbindung steht und das Packstück somit nicht mehr über die Unterdrucköffnung angesaugt wird, sind die hierbei auf das Packstück einwirkenden Kräfte nur sehr gering.

Die so an die Abtransporteinrichtung übergebenen Packstücke werden dann in der nunmehr erreichten Querlage von dieser erst über die Tischplatte 27 und anschließend über die Gleitschiene 41 zur nachfolgend angeordneten Verpackungsmaschine vorgeschoben.

Die Drehgeschwindigkeit der Drehscheibe kann auch so gewählt werden, daß ihre Umfangsgeschwindigkeit am Teilkreis geringfügig größer als die Zufuhrgeschwindigkeit bzw. Abtransportgeschwindigkeit im Übernahme- bzw. Übergabepunkt ist. Die Artikel werden dann von den Transportnocken des Zufuhr-Transportbandes mit konstanter Geschwindigkeit vorgeschoben, wobei die Drehstempel wegen ihrer höheren Geschwindigkeit die Artikel einholen und diese im Übergabepunkt A erreichen. Nach dem Ansaugen der Packstücke laufen die Drehstempel den Transportnocken ein Stück voraus und entfernen dabei die Artikel von den Nocken und transportieren sie gleichzeitig seitlich aus dem Eingriffsbereich der Transportnocken des oberen Transportbandes 22 heraus. Dadurch kann leicht sichergestellt werden, daß das jeweilige, von einem Drehstempel übernommene Packstück nicht von einem Transportnocken des Transportbandes wieder eingeholt werden kann, wenn dieses an der Umlenkrolle des Transportbandes nach oben und dabei gleichzeitig ein Stück weit nach vorn verschwenkt wird.

Die Zufuhreinrichtung und die Abtransporteinrichtung können auch über ihre gesamte Länge seitliche Führungsleisten aufweisen, wenn dies im Einzelfall gewünscht ist. Das Getriebe zwischen der Drehscheibe und den darin angeordneten Drehstempeln kann auch ein Zahnradgetriebe, beispielsweise ein geeignetes Planetengetriebe sein.

## Patentansprüche

1. Verfahren zum Ausrichten von einer Verpackungsmaschine aufeinanderfolgend zugeführten Packstücken aus ihrer Längslage in ihre Querlage, **dadurch gekennzeichnet, daß** die Packstücke (11) mittels einer Zufuhreinrichtung (18) vereinzelt und in Längslage einer Übergabeeinrichtung (19) zugeführt werden, die die Packstücke (11) in der Reihenfolge ihrer Zufuhr übernimmt und unter Beibehaltung von deren Lageausrichtung relativ zur Zufuhrrichtung (14) an eine Abtransporteinrichtung (20) übergibt, deren Transportrichtung (15) rechtwinklig zur Zufuhrrichtung ist.

2. Verfahren nach Anspruch 1, **dadurch gekennzeichnet, daß** die Packstücke (11) bei ihrer Übergabe von der Zufuhreinrichtung (18) zur Abtransporteinrichtung (20) mittels Unterdruck in ihrer Lage in der Übergabeeinrichtung (19) gehalten werden.

3. Verfahren nach Anspruch 1 oder 2, **dadurch gekennzeichnet, daß** die Packstücke (11) bei ihrer Zufuhr und/oder ihrem Abtransport von mindestens einer seitlichen Führungsleiste (28, 29 bzw. 42, 43) geführt werden, die etwa bis zu dem Übernahmepunkt (A) zwischen der Zufuhreinrichtung (18) und der Übergabeeinrichtung (19)bzw. dem Übergabepunkt (F) zwischen der Übergabeeinrichtung (19) und der Abtransporteinrichtung (20) reicht.

4. Verfahren nach einem der Ansprüche 1 bis 3, **dadurch gekennzeichnet, daß** die Transportgeschwindigkeiten (v) der Zufuhreinrichtung (18) und der Abtransporteinrichtung (20) etwa gleich groß sind.

5. Verfahren nach einem der Ansprüche 1 bis 4, **dadurch gekennzeichnet, daß** die Übergabeeinrichtung (19) im Übernahmepunkt (A) eine erste Geschwindigkeitskomponente in der Zufuhrrichtung (14) der Packstücke (11) hat, die deren Zufuhrgeschwindigkeit etwa entspricht, und daß die erste Geschwindigkeitskomponente während des Übergabevorgangs zur Abtransporteinrichtung (20) auf etwa Null verzögert wird, während gleichzeitig die normal zur ersten Geschwindigkeitskomponente verlaufende, zweite Geschwindigkeitskomponente von etwa Null im Übernahmepunkt (A) auf etwa die Abtransportgeschwindigkeit im Übergabepunkt (F) beschleunigt wird.

6. Verfahren nach einem der Ansprüche 1 bis 5, bei dem die Übergabeeinrichtung im wesentlichen als rotierende Scheibe mit darin gegenläufig rotierenden Haltemitteln für die Packstücke ausgebildet ist, **dadurch gekennzeichnet, daß** die einzelnen Packstücke (11) den Haltemitteln (34) im Übernahmepunkt (A) tangential zur Drehrichtung der Scheibe (31) zugeführt und nach einer Drehung der Scheibe (31) um etwa 90° im Übergabepunkt (F) tangential zur Scheibendrehrichtung von den Haltemitteln der Abtransporteinrichtung übergeben werden.

7. Vorrichtung zum Ausrichten von Packstücken aus ihrer Längslage in ihre Querlage, in der sie nacheinander einer Verpackungsmaschine zugeführt werden, mit einer Zufuhreinrichtung und mit einer Abtransporteinrichtung und mit einer Übergabeeinrichtung, mit deren Hilfe die Packstücke in ihrer Längslage nacheinander von der Zufuhreinrichtung übernommen und in ihrer Querlage der Abtransporteinrichtung übergeben werden, **dadurch gekennzeichnet, daß** die Übergabeeinrichtung (19) im wesentlichen aus einer Drehscheibe (31) besteht, zu der die Zufuhreinrichtung (18) und die Abtransporteinrichtung (20) etwa tangential ausgerichtet sind, wobei die Drehscheibe (31) mindestens ein gegenüber dieser verdrehbares Haltemittel (34) aufweist, mit dessen Hilfe ein Packstück (11) zwischen dessen Übernahme von der Zufuhreinrichtung (18) und dessen Übergabe an die Abtransporteinrichtung (20) gegenüber der Drehscheibe (31) um 90° verdreht wird.

8. Vorrichtung nach Anspruch 7, **dadurch gekennzeichnet, daß** die Drehscheibe (31) mit mehreren, auf ihren Umfang verteilten Halteeinrichtungen (34 a-f) versehen ist.

9. Vorrichtung nach Anspruch 7 oder 8, **dadurch gekennzeichnet, daß** die Halteeinrichtungen (34 a-f) im wesentlichen als in der Ebene der Drehscheibe angeordnete Drehteller mit Ansaugöffnungen (36) ausgebildet sind, die mit einer Unterdruckeinrichtung (37) verbindbar sind.

10. Vorrichtung nach einem der Ansprüche 7 bis 9, **dadurch gekennzeichnet, daß** die Ansaugöffnungen (36) im Drehbereich der Drehscheibe (31) etwa zwischen dem Übernahmepunkt (A) von der Zufuhreinrichtung (18) und dem Übergabepunkt (F) an die Abtransporteinrichtung (20) mit der Unterdruckeinrichtung (37) verbunden sind.

11. Vorrichtung nach einem der Ansprüche 7 bis 10, **dadurch gekennzeichnet, daß** die Halteeinrichtungen (34 a-f) über ein Getriebe mit der Drehscheibe (31) bzw. mit deren Drehantrieb gekoppelt ist.

12. Vorrichtung nach Anspruch 11, **dadurch gekennzeichnet, daß** das Getriebe ein Parallelkurbelgetriebe ist.

13. Vorrichtung nach einem der Ansprüche 7 bis 12, **dadurch gekennzeichnet, daß** die Drehscheibe (31) und die Drehteller (34) der Halteeinrichtungen in einer Ebene mit einer die Scheibe umgebenden Tischplatte (27) angeordnet sind.

14. Vorrichtung nach einem der Ansprüche 7 bis 13, **dadurch gekennzeichnet, daß** die Zufuhreinrichtung (18) und die Abtransporteinrichtung (20) im rechten Winkel zueinander angeordnet sind.

15. Vorrichtung nach einem der Ansprüche 7 bis 14, **dadurch gekennzeichnet, daß** die Zufuhreinrichtung (18) und die Abtransporteinrichtung (20) je ein oberhalb der Packstücke (11) angeordnetes, umlaufendes Transportband (22 bzw. 39) mit die Packstücke (11 ) an einer ihrer Quer-seiten (12) bzw. Längsseiten (16) hintergreifenden Transport-nocken (23 bzw. 40) aufweist.

16. Vorrichtung nach Anspruch 15, **dadurch gekennzeichnet, daß** der Abstand der Transportnocken (23, 40) dem Bogenabstand der Drehachsen der Halteeinrichtungen (34 a-f) etwa entspricht.

17. Vorrichtung nach einem der Ansprüche 7 bis 16, **dadurch gekennzeichnet, daß** die Zufuhreinrichtung (18) und die Abtransporteinrichtung (20) mit mindestens einer seitlichen Führungsschiene (28, 29 bzw. 42, 43) für die Packstücke (11) versehen ist.

18. Vorrichtung nach einem der Ansprüche 7 bis 17, **dadurch gekennzeichnet, daß** die Zufuhreinrichtung (18) und die Abtransporteinrichtung (20) je zwei seitliche Führungsschienen (28, 29 bzw. 42, 43) aufweisen, die etwa in Tangentialrichtung über die Drehscheibe (31) bis mindestens etwa zu dem Übernahmepunkt (A) bzw. Übergabepunkt (F) reichen.

19. Vorrichtung nach Anspruch 17 oder 18, **dadurch gekennzeichnet, daß** die radial weiter außenliegenden Führungsschienen (28 bzw. 43) bis über den Übernahmepunkt (A) bzw. den Übergabepunkt (F) hinausgehen.

20. Vorrichtung nach einem der Ansprüche 7 bis 19, **dadurch gekennzeichnet, daß** die Zufuhreinrichtung (18), die Übergabeeinrichtung (19) und die Abtransporteineinrichtung (20) von einem gemeinsamen Antrieb angetrieben sind.

21. Vorrichtung nach einem der Ansprüche 7 bis 20, **dadurch gekennzeichnet, daß** die Zufuhreinrichtung (18), die Übergabeeinrichtung (19) und die Abtransporteinrichtung (20) von der Verpackungsmaschine angetrieben sind.

22. Vorrichtung nach einem der Ansprüche 7 bis 21, **dadurch gekennzeichnet, daß** die Umfangsgeschwindigkeit der Drehscheibe (31) im Bereich des Teilkreises (32) der Halteeinrichtungen (34) etwa gleich groß oder geringfügig größer ist als die Transportgeschwindigkeit (v̇) der Zufuhreinrichtung.
